# EUROPEAN PATENT APPLICATION

(11) **EP 4 790 625 A1**
(43) Date of publication of application: **12.08.2026**
(21) Application number: 25157092.5
(22) Date of filing: 11.02.2025
(51) Int. Cl.: G06Q 30/018, H04L 9/32, H04L 9/00, G06F 21/64, G06Q 50/06

(54) **METHOD TO MAKE POWER ORIGIN LABELS TRUSTWORTHY AND VERIFIABLE**

(71) Applicant: ABB SCHWEIZ AG, 5400 Baden (CH)
(72) Inventor: FINSTER, Soeren, 76139 Karlsruhe (DE); KOHNHAEUSER, Florian, 64560 Riedstadt (DE); SCHLOEDER, Matthias, 69126 Heidelberg (DE); BISKOPING, Matthias, 69493 Hirschberg (DE)
(74) Representative: Maiwald GmbH

(57) **Abstract**

There is provided a method for making a power origin label trustworthy and verifiable in an industrial context, the method comprising: obtaining the power origin label that carries information about one or more power origins of power used for production of a product; and adding, to the power origin label, a reference to metadata that provides evidence for the information about the one or more power origins.

## Description

### FIELD OF THE INVENTION

The invention relates to a method for making a power origin label trustworthy and verifiable in an industrial context. Moreover, the invention relates to a data processing apparatus, to a computer-readable medium, to a computer program product and to a use of one or more power origin labels.

### BACKGROUND

In an industrial context, there are known techniques to track and label the origin of energy, which allows to generate power origin labels that show where the energy for producing a specific product came from. For example, a power origin label could indicate that the energy used for producing a certain product came exclusively from renewable energy sources, therefore increasing the value and attractiveness of the product. However, commonly known techniques do not take into account a trustworthiness and security of power origin labels from the perspective of the consumer. Trust into the power origin label is purely based on the honesty of the vendor since there is no technical measure to put trust in the power origin labels. For example, a vendor could claim to have used only renewable energy for product production, when in fact non-renewable energy was used. From the customers perspective, there is no way to check the validity of power origin labels. Therefore, there is an incentive for vendors to provide forged power origin labels to gain an unfair advantage. Without technical mechanisms to support the trust in power origin labels, the attractiveness of power origin labels is reduced. It is desirable to include technical measures that allow auditors and/or customers to check the validity of power origin labels.

The above-described issues highlight the need for increasing trustworthiness and security of power origin labels in an industrial context. Hence, in an industrial context, there is the problem of how to increase trustworthiness and security of power origin labels.

Hence, there is room and need for improvement regarding the increase of trustworthiness and security of power origin labels in an industrial context.

### SUMMARY

In view of the above, it is an object of the present disclosure to overcome at least part of the drawbacks available regarding the trustworthiness and security of power origin labels in an industrial context.

Therefore, to address one or more of these drawbacks, there is provided, in a first aspect, a method for making a power origin label trustworthy and verifiable in an industrial context. The method comprises obtaining the power origin label that carries information about one or more power origins of power used for production of a product. The method further comprises adding, to the power origin label, a reference to metadata that provides evidence for the information about the one or more power origins.

The term 'power origin' is to be understood in a broad way. For example, by 'power origin' it may be meant 'power source'. The term 'power origin' is outlined below in more detail by use of several examples. The term 'power' is to be understood in a broad way. For example, by the 'power' used for the production of the product it may be meant 'electrical energy' used for the production of the product.

The term 'trustworthy' may be understood in that it may be trusted that the power origin label is correct or was determined, generated or calculated correctly. I.e., it may be trusted that the data used to determine, generate or calculate the power origin label are correct. Said in other words, it may be trusted that the power origin label was not tempered with or was not manipulated. I.e. it may be trusted that the data used to determine, generate or calculate the power origin label were not tempered with or were not manipulated. The term `verifiable' may be understood in that the data may be verifiable that were used to determine, generate or calculate the power origin label.

Obtaining the power origin label may comprise, for example, receiving, acquiring or retrieving the power origin label from an entity that has determined, generated or calculated the power origin label. Additionally or alternatively, obtaining the power origin label may comprise, for example, acquiring or retrieving the power origin label from a data storage.

The power origin label may be understood to be indicative of the information about the one or more power origins of the power used for the production of the product.

The information about the one or more power origins of the power may be understood as being information that are indicative of the origins or sources (power sources) of the power.

According to several examples of the present disclosure, the method may further comprise providing or outputting to an external party, for example to a user, an apparatus and/or a system, the one or more power origin labels to which the reference has been added.

It should be noted that the method according to the first aspect may be understood as a method performed by a service provider or an application provider for example. The service provider or application provider provides a solution for increasing trustworthiness and security of a power origin label in that the reference is added to the power origin label. The service provider or application provider may be a manufacturing company that produces the product. Additionally or alternatively, the service provider or application provider may be a vendor that sells the produced product. A service user or an application user may then obtain or receive the power origin label to which the reference has been added.

Obtaining the power origin label as outlined above is to be understood as calculating or generating the power origin label. The information about the one or more power origins of power or energy that was used for the production of the product may be understood as energy data.

In this regard, it shall be noted that it is not the metadata that are added to the power origin label, but it is the reference to the metadata that is added to the power origin label. The metadata then provide the evidence for the information about the one or more power origins of the power origin label.

The method may be at least in parts computer-implemented. Preferably, the method is computer-implemented.

For reasons of understandability, it shall be noted that the expression "power origin labeling processing" may mean, for example, that one or more power origin labels are determined, generated or calculated. In view thereof, a power origin label may label an amount of power or energy with respect to its origin, wherein the origin is, for example, at least one of renewable energy and energy from fossil fuels (i.e. non-renewable energy). Additionally or alternatively, the origin may also be indicative of a geographical location where the amount of power or energy was generated or produced. Further, the renewable energy or the power origin of the renewable energy may then be even further subdivided according to one or more several types or sources of renewable energy, for example. Similar, the non-renewable energy or the power origin of the non-renewable energy may then be even further subdivided according to one or more several types or sources of non-renewable energy, for example. Hence, a power origin label may be associated with at least one of a product, a part of the product (for example one or more used starting materials, components or pre-products), and one or more processing steps for manufacturing or producing the product or the part of the product. The power origin label may be indicative of an amount of power or energy that was required for manufacturing or production of the product and/or for manufacturing or production of the part of the product and/or for executing one or more processing steps, for example. Additionally or alternatively, the power origin label may be indicative of a type of energy and/or of an energy mix that was required for manufacturing or production of the product or for manufacturing or production of the part of the product or for executing one or more processing steps. For example, a share of renewable energy and a share of energy from fossil fuels may be indicated in the energy mix.

By the term "metadata" it is meant, for example, additional or supplementary data to the power and/or the amount of power that is labeled by the power origin label with respect to its origin. For example, the metadata may be indicative of weather conditions, for example sunny or windy, that may allow to further verify and understand the origin of power and/or of an amount of the power, for example power obtained from a photovoltaic system or from a wind turbine. Hence, by the term "evidence" it is meant, for example, a proof that an indication made by the power origin label is correct. For example, in case the power origin label may indicate that a certain amount of power was obtained from or generated by a photovoltaic system, the corresponding metadata may indicate a location of this photovoltaic system and weather conditions available at this location, for example available in a predetermined time period or in a time period of interest. Hence, in case the metadata may indicate that there were several hours of sunny weather at the certain location during the time period of interest, i.e. during the time period when the power indicated or labelled by the power origin label was generated, then this metadata including the certain weather condition may prove that the amount of power was indeed generated from the photovoltaic system. The terms "metadata" and "evidence" are explained in more detail further below.

The method according to the first aspect is advantageous in several ways.

First, there is offered a significant business benefit by preventing greenwashing in power origin labeling. By ensuring the integrity and verifiability of energy data, it is protected against deceptive practices that misrepresent products' environmental credentials. This transparency not only builds trust with consumers but also enhances the credibility of businesses committed to genuine sustainability efforts, positioning them favorably in competitive markets.

Second, the provided solution demonstrates a strong commitment to sustainability. By adopting robust measures to secure and verify the origin of energy used in products, businesses showcase their dedication to transparent environmental practices. This proactive approach not only enhances credibility in the eyes of consumers, regulators, and stakeholders but also aligns with global efforts towards achieving sustainable development goals. It positions organizations as leaders in environmental responsibility, fostering a positive reputation and competitive advantage in markets increasingly prioritizing sustainability initiatives.

Third, implementing the disclosed solution may allow to enhance customer trust and reputation as a crucial business benefit. By ensuring the authenticity and transparency of energy origin labels, manufacturers bolster their credibility as trustworthy providers committed to sustainable practices. This builds stronger relationships with environmentally conscious consumers who value transparency and integrity in product sourcing. Moreover, a positive reputation for sustainability can attract new customers, differentiate the brand in competitive markets, and increase customer loyalty.

Fourth, implementing the disclosed solution can further ensure compliance with security standards and requirements, which offers significant business benefits. By adhering to established security protocols and regulations, manufacturers demonstrate their commitment to protecting sensitive energy origin data from tampering or misuse. This compliance enhances trust among customers, partners, and regulatory bodies, ensuring that the power origin labeling process meets rigorous security standards. Moreover, adherence to these standards mitigates risks associated with data breaches or fraudulent activities, protecting the company's reputation, and minimizing potential legal and financial liabilities.

According to several examples of the present disclosure, the method may further comprise adding, to the power origin label, a cryptographic signature and/or committing the power origin label and the metadata to a ledger-based evidence collection platform. The cryptographic signature may refer to a manufacturing company that has produced the product and that has provided energy data about energy that was used for the production. The energy data may represent the information about the one or more power origins of the power or energy used for the production of the product. Additionally or alternatively, the cryptographic signature may refer to a vendor that sells the product. In general, the cryptographic signature may refer to a manufacturing company or vendor that has provided the information or energy data that were used to calculate or generate the one or more power origin labels. Additionally or alternatively, the cryptographic signature may prove that the one or more power origin labels were calculated or generated by a verified power labeling algorithm. Through a ledger-based evidence collection platform, it can be ensured that there was no omission or re-issuing of the power origin label since any new power origin label will build upon the chain in the ledger-based evidence collection platform.

Hence, a trustworthiness of the power origin label is further increased, for example there is increased reliability that the power origin label was not tampered with.

According to several examples of the present disclosure, adding the reference may comprise constructing the reference as a cryptographic hash that is computed over the metadata; and adding, to the power origin label, the cryptographic hash.

According to several examples of the present disclosure, adding the reference to the metadata may comprise adding the reference to one or more pieces of the metadata, wherein the one or more pieces of the metadata are a share of the metadata that is associated with the power origin label. Hence, the cryptographic hash may reference to one or more of the pieces of the metadata, i.e. may reference to a share of the metadata.

Said in other words, the metadata may comprise a plurality of pieces of metadata and a power origin label may be associated with one or more of the pieces. For example, a first piece of the metadata may be indicative of a weather condition for a certain location. Hence, to a power origin label for power generated by a photovoltaic system at the certain location it may be added a reference to the first piece of the metadata. In doing so, other pieces of the metadata may be kept secret.

Hence, there is provided a solution for how the metadata and/or the one or more pieces of the metadata, that are associated with a power origin label, may be made accessible or available for an external party in a secure way, that has obtained the power origin label and that has requested the metadata and/or the one or more pieces of the metadata, that are associated with the obtained power origin label.

According to several examples of the present disclosure, the metadata may comprise an aggregation of a plurality of data points, wherein a data point of the plurality of data points may be associated with a share of the power used for the production of the product, wherein the share is in a range from 0% to 100%.

A piece of the aggregation of the plurality of data points may be understood as representing a piece of the metadata as outlined above.

Hence, the metadata may allow for differentiation between different energy sources or power sources.

According to several examples of the present disclosure, the metadata may comprise an aggregation of a plurality of pieces of sub-metadata, wherein a piece of sub-metadata of the plurality of pieces of sub-metadata may be associated with a share of the power used for the production of the product, wherein the share is in a range from 0% to 100%.

A piece of the aggregation of the plurality of pieces of sub-metadata may be understood as representing a piece of the metadata as outlined above.

Hence, the metadata may allow for differentiation between different energy sources or power sources.

According to several examples of the present disclosure, the data points of the plurality of data points may have different trustworthiness, the pieces of sub-metadata of the plurality of pieces of sub-metadata may have different trustworthiness.

According to several examples of the present disclosure, aggregated data points in the aggregation of the plurality of data points may have heterogenous trust levels, aggregated pieces of sub-metadata in the aggregation of the plurality of pieces of sub-metadata may have heterogenous trust levels.

According to several examples of the present disclosure, the metadata may comprise at least one of:
- measurements from power management systems in a factory associated with the production of the product,
- inverters of a photovoltaic installation associated with the power used for the production,
- power consumption of one or more machines associated with the production of the product, and
- a weather report indicative of one or more environmental conditions associated with the production of the product.

For example, in case the production of the product may comprise several processing steps, the measurements may indicate a respective amount of power that is required for each single processing step of the plurality of processing steps.

For example, the inverters may indicate an amount of power that was generated by the photovoltaic installation or the photovoltaic system.

For example, in case several machines may participate and/or may be required in the production or manufacturing of a product, for example one or more certain machines may be required for a certain processing step of the several processing steps, it may be indicated a power consumption on a machine level, i.e. for each single machine.

For example, the weather report may be indicative of sunny or windy weather conditions that may be associated with power generated from a photovoltaic installation or a wind turbine.

According to several examples of the present disclosure, the metadata may comprise at least one of: verifiable data, non-verifiable data, and power origin labels associated with an origin of the metadata.

Hence, said in other words, the metadata could include themselves power origin labels. Reliability and trustworthiness may thus be further increased.

According to several examples of the present disclosure, the method may further comprise: empowering an auditor to verify an accuracy and an authenticity of data that went into a generating of the power origin label and/or to verify a labeling process that was performed for the generating of the power origin label, wherein the empowering may be based on enabling the auditor to access one or more pieces of the metadata that are associated with the power origin label based on the added reference. The one or more pieces of the metadata may be understood as representing or being a share of the metadata.

Prior to the empowering, the method may comprise that the one or more power origin labels to which the reference has been added are output or provided to an external party, for example to the auditor, as already outlined above.

Based on the empowering, according to several examples of the present disclosure, the method may further comprise: experiencing or recognizing an access from an external party, for example the auditor, a user, an apparatus and/or a system, to the metadata and/or one or more pieces of the metadata to which the added reference refers. The external party may have received the one or more power origin labels or the one or more power origin labels were provided to the external party. Based thereon, the external party may know the reference and is enabled to access the corresponding metadata and/or the one or more corresponding pieces of the metadata.

Alternatively, based on the empowering, according to several examples of the present disclosure, the method may further comprise: receiving, from an external party, for example the auditor, a user, an apparatus and/or a system, a request to provide the metadata and/or one or more pieces of the metadata to which the added reference refers to the external party. The external party may have received the one or more power origin labels or the one or more power origin labels were provided to the external party. Based thereon, the external party may request the corresponding metadata and/or the one or more corresponding pieces of the metadata.

Hence, due to the added reference, the auditor is only enabled to access (or request) the metadata and/or the one or more pieces of the metadata to which the added reference refers, i.e. the reference that was added to the one or more power origin labels to which the auditor has access. Therefore, different or further pieces of the metadata remain inaccessible to the auditor. Thus, data security and reliability is increased.

Therefore, according to several examples of the present disclosure, there is provided a method for obtaining power origin labels with increased trustworthiness. For example, such method may comprise obtaining or receiving one or more power origin labels to which a reference has been added, wherein the reference refers to metadata that provide evidence for the information indicated by the one or more power origin labels. Such method may further comprise accessing the metadata based on the reference.

According to a second aspect, there is provided a data processing apparatus. The data processing apparatus comprises one or more processors being configured to carry out the method of the first aspect.

According to a third aspect, there is provided a data processing system. The data processing system comprising an apparatus of the second aspect. Additionally or alternatively, the data processing system comprises means for carrying out the method of the first aspect.

According to a fourth aspect, there is provided an industrial plant comprising an apparatus of the second aspect. Additionally or alternatively, the industrial plant comprises a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

According to a seventh aspect, there is provided a use of at least one of a data processing apparatus of the second aspect, a data processing system of the third aspect, an industrial plant of the fourth aspect, a computer-readable medium of the fifth aspect, and a computer program product of the sixth aspect.

In particular, according to several examples of the present disclosure, there is provided a use of one or more power origin labels for labelling a power origin of power used in an industrial context, wherein the one or more power origin labels are obtained according to the method according to the first aspect.

Each of the second aspect to the seventh aspect is advantageous in several ways.

First, there is offered a significant business benefit by preventing greenwashing in power origin labeling. By ensuring the integrity and verifiability of energy data, it is protected against deceptive practices that misrepresent products' environmental credentials. This transparency not only builds trust with consumers but also enhances the credibility of businesses committed to genuine sustainability efforts, positioning them favorably in competitive markets.

Second, the provided solution demonstrates a strong commitment to sustainability. By adopting robust measures to secure and verify the origin of energy used in products, businesses showcase their dedication to transparent environmental practices. This proactive approach not only enhances credibility in the eyes of consumers, regulators, and stakeholders but also aligns with global efforts towards achieving sustainable development goals. It positions organizations as leaders in environmental responsibility, fostering a positive reputation and competitive advantage in markets increasingly prioritizing sustainability initiatives.

Third, implementing the disclosed solution may allow to enhance customer trust and reputation as a crucial business benefit. By ensuring the authenticity and transparency of energy origin labels, manufacturers bolster their credibility as trustworthy providers committed to sustainable practices. This builds stronger relationships with environmentally conscious consumers who value transparency and integrity in product sourcing. Moreover, a positive reputation for sustainability can attract new customers, differentiate the brand in competitive markets, and increase customer loyalty.

Fourth, implementing the disclosed solution can further ensure compliance with security standards and requirements, which offers significant business benefits. By adhering to established security protocols and regulations, manufacturers demonstrate their commitment to protecting sensitive energy origin data from tampering or misuse. This compliance enhances trust among customers, partners, and regulatory bodies, ensuring that the power origin labeling process meets rigorous security standards. Moreover, adherence to these standards mitigates risks associated with data breaches or fraudulent activities, protecting the company's reputation, and minimizing potential legal and financial liabilities.

Optional features of the first aspect may form part of any of the second aspect to the seventh aspect, mutatis mutandis.

The computer-readable medium of the fifth aspect may have stored thereon the computer program product of the sixth aspect.

The term "obtaining", as used herein, may comprise, for example, receiving from another system, apparatus, device or process; receiving via an interaction with a user; loading or retrieving from storage or memory; measuring or capturing using sensors or other data acquisition devices, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a power origin labeling solution according to several examples of the present disclosure;
- Figure 2 illustrates a flowchart indicative of a method according to several examples of the present disclosure; and
- Figure 3 illustrates a block diagram schematically showing a data processing apparatus according to several examples of the present disclosure.

### DETAILED DESCRIPTION

According to several examples of the present disclosure, the present disclosure provides a solution for enhancing the security and trustworthiness of energy data tracking and labeling systems. Thereby it is addressed the risk of tampering with power origin labels. It is disclosed a power labeling algorithm that may generate signed power origin certificates, that incorporate additional metadata, such as weather conditions. This allows validation of energy data and supports plausibility checks with additional metadata. The data, along with power labels, may be committed to a ledger-based evidence collection platform that can be stored centrally or distributed. The solution as disclosed according to several examples of the present disclosure provides external auditors with the opportunity to verify power origin labels against committed energy data and metadata. This process may detect manipulations and may ensure label authenticity without unnecessary disclosure. By preventing greenwashing and enhancing trust in power labels, the present disclosure supports sustainability and customer trust.

For example, to increase understandability and without being limited to that, document EP4481647 describes a technique to track and label the origin of energy or energy data.

In general, techniques to track and label the origin of energy or energy data may allow generate power origin labels which show where the energy for producing a specific product came from. For example, a power origin label could indicate that the energy used for producing a certain product came exclusively from renewable energy sources, therefore increasing the value and attractiveness of the product. However, currently, it is not taken into account trustworthiness and security of power origin labels from the perspective of the consumer. Trust into the power origin label is purely based on the honesty of the vendor since there is no technical measure to put trust in the power origin labels. For example, a vendor could claim to have used only renewable energy for product production, when in fact non-renewable energy was used. From the customers perspective, there is no way to check the validity of power origin labels. Therefore, there is an incentive for vendors to provide forged power origin labels to gain an unfair advantage. Without technical mechanisms to support the trust in power origin labels, the attractiveness of power origin labels is reduced.

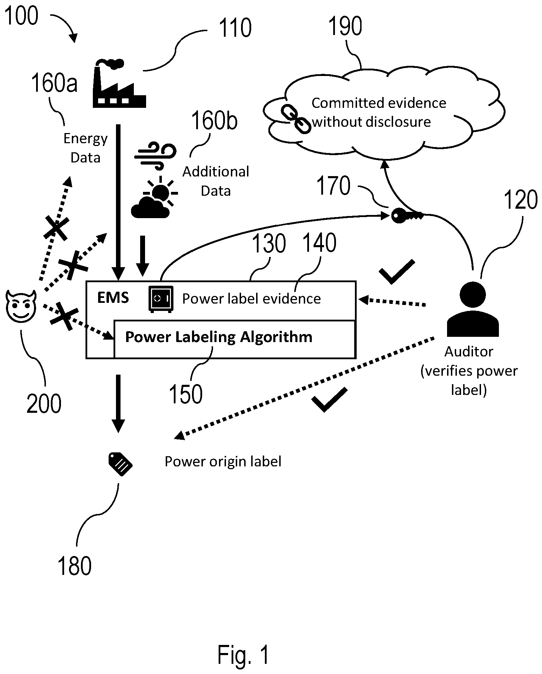

In view thereof, according to several examples of the present disclosure, to introduce auditability, proof and trust into power origin labels, the present disclosure proposes a method of combining verifiable information and non-verifiable information into an evidence collection system that supports the power origin labels. With the solution in place, a power origin label may carry the information about the power origins, may reference additional metadata that provides evidence for the information in the power label and may carry a cryptographic signature from the vendor of the product. This protects the power origin label against tampering and assures the origin of the power origin label. This is schematically illustrated in Figure 1.

According to several examples of the present disclosure, the vendor may be understood as representing a service provider or application provider, i.e. a party that provides the power origin labels to which the references to the corresponding metadata were added. Wherein the consumer may be understood as representing a service user or application user, i.e. a party that uses the provided references to verify a trustworthiness of the power origin labels.

Referring now to Figure 1, Figure 1 illustrates a power origin labeling solution according to several examples of the present disclosure. Figure 1 schematically illustrates a system 100 which comprises a manufacturer or a manufacturing company 110, for example such vendor as outlined above, an external party 120, for example an auditor, and an energy management system (EMS) 130. The EMS 130 may comprise power label evidence 140 that may comprise such metadata 140 as outlined above and such cryptographic signature as mentioned above. The EMS 130 may further comprise a power origin labeling algorithm or power labeling algorithm 150, i.e. the power labeling algorithm 150 is implemented and/or executed in the EMS 130. Further, as indicated in Figure 1, the manufacturing company 110 may store in the EMS 130 energy data 160a and additional data 160b. The energy data 160a may be associated with the energy or power that was used by the manufacturing company 110 to produce a certain product A for example. In more detail, the energy data 160a may be data about the energy or power that was used by the manufacturing company 110 to produce the certain product A for example. A power origin label for the certain product A may then indicate the origin or the source of the energy or power that was used by the manufacturing company 110 to produce the certain product A. The additional data 160b may be associated with the energy data 160a and may represent such metadata as mentioned above. The additional data 160b may comprise supplementary information on the energy data 160a. For example, the additional data 160b may comprise information that are indicative of weather conditions that may allow to evaluate a reliability or trustworthiness of the energy data 160a. For example, if the energy data 160a may indicate that a certain amount of energy was generated by a photovoltaic system, the additional data 160b may indicate weather conditions, for example sunny weather, for the time the amount of energy was gained and/or for the location where the photovoltaic system is installed.

The manufacturing company 110 inputs the energy data 160a and the additional data 160b to the EMS 130 or provides the energy data 160a and the additional data 160b to the EMS 130 for the power labeling algorithm 150 to calculate or generate the one or more power origin labels 180. Hence, the power labeling algorithm 150 may use the energy data 160a and the additional data 160b, i.e. the energy data 160a and the metadata, to calculate the one or more power origin labels 180 that may then be provided as output from the EMS 130.

For example, to increase understandability, it may be assumed herewith without limitation that the manufacturing company 110 produces the above-mentioned certain product A. To obtain this product A, several different processing steps S1, S2 and S3 are to be executed. In these processing steps S1, S2 and S3, several different starting materials B and C, as well as several different pre-products and components D and E are processed in a predetermined workflow. For the step S1, an energy amount E1 may be needed, for the step S2, an energy amount E2 may be needed, and for the step S3, an energy amount E3 may be needed. E1 may comprise an energy mix M1, E2 may comprise an energy mix M2, and E3 may comprise an energy mix M3. For example, M1 may comprise 100% renewable energy, M2 may comprise 100% fossil energy, i.e. energy from fossil fuels, and M3 may comprise 50% renewable energy and 50% energy from fossil fuels. The energy data 160a that are provided by the manufacturing company 110 may comprise all these data/information E1 to E3 and M1 to M3. In addition, the additional data 160b are provided that comprise supplementary information on the energy data 160a, i.e. supplementary information on these data/information E1 to E3 and M1 to M3. Such supplementary information may be, for example and without being limited to that, weather conditions, power origin labels for the energy amounts E1 to E3, power origin labels for the starting materials B and C as well as the pre-products and components D and E, verification or proof about the amount of energy that is indeed used for each of the processing steps S1 to S3, etc.

The power labeling algorithm 150 may then use the energy data 160a to calculate one or more power origin labels 180 for the certain product A. In addition, the power labeling algorithm 150 may then add to the calculated one or more power origin labels 180 one or more references to the corresponding additional data 160b. The additional data 160b may be part of the power label evidence 140.

The external party 120 may verify a trustworthiness of the one or more power origin labels 180, for the certain product A, by accessing or reviewing the corresponding additional data 160b, i.e. the corresponding metadata.

According to several examples of the present disclosure, the external party 120 may further verify a trustworthiness of the one or more power origin labels 180, for the certain product A, by accessing or reviewing the cryptographic signature of the manufacturing company 110. The manufacturing company 110 may input or provide its cryptographic signature to the EMS 130 for the power labeling algorithm 150 to add the cryptographic signature to the energy data 160a and/or to the additional data 160b provided by the manufacturing company 110.

It is further indicated in Figure 1 that, additionally, the auditor 120 may be provided with an access code, decryption key, or key 170 that is associated with one or more certain pieces of metadata to which the reference refers that has been added (by the power labeling algorithm 150 for example) to the power origin labels 180 provided to the auditor 120. Said in other words, the key 170 may empower the auditor 120 to access the one or more certain pieces of metadata.

It is further indicated in Figure 1 that, additionally, once created power origin labels 180 may be stored on an evidence collection platform 190, for example, as outlined below in more detail.

It is further indicated in Figure 1 that due to security measures taken, it is not possible for an attacker 200 to manipulate the power labeling algorithm 150, the energy data 160a or the additional data 160b.

In the following, the system 100 as illustrated in Figure 1 is outlined in more detail.

Namely, according to several examples of the present disclosure, the reference to the additional data 160b or metadata may be constructed as a cryptographic hash that is computed over the actual metadata. This way, the power origin label 180 does not carry the actual metadata, but only a reference to it, which allows the vendor or manufacturing company 110 to reveal the metadata that was used when the power origin label 180 was produced during verification. Therefore, the power origin label 180 does not disclose any sensitive information without interaction from the vendor. Nevertheless, it binds the vendor to the metadata used during generating the power origin label 180. Thus, a malicious vendor who reveals bogus metadata to greenwash his product is detected during verification.

According to several examples of the present disclosure, the metadata that provides evidence for the power origin label 180 can be an aggregation of several data points with different trustworthiness. Examples include cryptographically verifiable data, plausible data and purely informational data.

If a power origin label 180 needs to be verified, for example by an auditor 120 during spot checks, the vendor can reveal the metadata and therefore prove the power origin label 180 or at least increase the confidence into the power origin label 180 through supporting evidence.

According to several examples of the present disclosure, in addition to the metadata, there is also disclosed as an optional further part of the solution a ledger-based evidence collection platform in the cloud or in a distributed peer-to-peer system. The ledger-based evidence collection platform is indicated in Figure 1 by reference number 190. By committing power origin labels 180 and the included metadata to the evidence collection platform 190, power origin labels 180 are not only protected against tampering but also against omission or re-issuing. Thus, post-production greenwashing attacks are likewise prevented.

According to several examples of the present disclosure, with the above-described solution, auditors 120 can verify the correctness and authenticity of power origin labels 180. The verification is achieved without the vendor revealing more information than necessary for providing evidence for one specific power origin label 180. This allows a very fine-granular auditing process that can be even on the level of single power origin labels 180. The metadata that provides evidence for the power origin label 180 can be an aggregation of several data points. For example, it can include measurements from power management systems in a factory, inverters of a photovoltaic installation, power consumption of individual machines, or even a weather report. Furthermore, the metadata themselves can be of heterogeneous trust levels and do not necessarily have to be verifiable. For example, data from an inverter of a photovoltaic installation might not be verifiable due to the inverter not providing this functionality. This lack of trust might be augmented with a verifiable weather report that asserts sunshine during the time frame in question. By cryptographically signing power origin labels 180, manipulation of the power origin label 180 itself as well as all included or referenced metadata can be detected. This prevents not only the vendor from cheating but also allows the usage of compound power origin labels180 if the product in question is used in a deeper supply chain to manufacture other products. Through a broad support of metadata types, it is possible to include verifiable evidence (e.g., cryptographically signed data) and non-verifiable evidence (e.g., consumption data from machines). However, all metadata may be protected from tampering by using a hash-based reference in the power origin label 180 and committing the power origin label 180 to the evidence collection platform. Through a ledger-based evidence collection platform 190, the auditor 120 can be sure that there was no omission or re-issuing of power origin labels 180 since any new power origin label 180 will build upon the chain in the ledger-based evidence collection platform 190. Tampering with existing power origin labels 180 is therefore prohibited even though the original issuing vendor is in possession of all key material.

Hence, according to several examples of the present disclosure, protection of power origin labels 180 is provided. Such protection ensures that the power origin labels 180 remain secure and untampered. This protection prevents any external entity or attacker 200 from modifying power origin labels 180, thereby maintaining its integrity and trustworthiness. Through referencing, but not disclosing, additional evidence in metadata, any confidential information can be kept secret until it is necessary to reveal during verification, e.g., to an auditor 120. By securing the power origin labels 180 and ensuring its verifiability, the present disclosure enhances the reliability and business value of the power origin labels 180, fostering greater trust among external parties, for example customers, auditors 120, and regulatory agencies.

Moreover, according to several examples of the present disclosure, external verification of the power origin labels 180 is provided. The feature of secure verifiability ensures that auditors 120 can confidently utilize energy data, knowing it has remained untampered with. This is a critical aspect for securing the power origin labels 180 themselves. Auditors 120 are empowered to verify the accuracy and authenticity of all the data that went into generating the power origin labels 180 as well as an entire power origin labeling process (that may be performed by the power labeling algorithm 150). This verification capability can occur dynamically during operation, allowing audits to be conducted at any time and with flexible frequency.

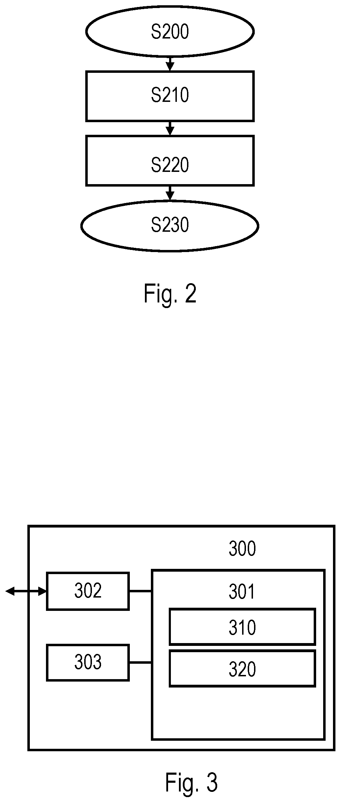

Referring now to Figure 2, Figure 2 illustrates a flowchart indicative of a method according to several examples of the present disclosure. The method is for making a power origin label trustworthy and verifiable in an industrial context. The method may be such method as outlined with reference to Figure 1. The method may be performed by such vendor or manufacturing company 110, EMS 130 or power labeling algorithm 150 as illustrated with reference to Figure 1. Hence, the manufacturing company 110 may also be understood as representing a service provider or application provider. However, it shall be noted that, alternatively, the method may also be performed by a third party, i.e. by a service provider or application provider that is different from the manufacturing company 110. For example, the third party may be a party that provides or hosts the EMS 130 as illustrated with reference to Figure 1 and/or that provides or hosts the power labeling algorithm 150.

The method starts in S200.

In S210, the method comprises obtaining the power origin label 180 that carries information about one or more power origins of power used for production of a product.

In S220, the method comprises adding to the power origin label 180 a reference to metadata that provides evidence for the information about the one or more power origins.

The method ends in S230.

Referring now to Figure 3, Figure 3 shows a block diagram schematically illustrating a data processing apparatus 300 according to several examples of the present disclosure. In particular, there is provided an apparatus 300 for making a power origin label trustworthy and verifiable in an industrial context, as outlined above with reference to Figure 1. The apparatus 300 comprises one or more processors 301 being configured to carry out the method as outlined above with reference to Figure 2. The apparatus 300 may comprise means to function and/or run such EMS 130 as outlined above with reference to Figure 1.

In more detail, according to various examples, the apparatus 300 being configured to carry out the method of Figure 2 may comprise a processing circuitry, a processing function, a processing means, a processing unit or a processor 301, which enables the apparatus 300 to participate in making a power origin label trustworthy and verifiable in an industrial context. The processor 301 may comprise one or more processing portions or functions, wherein the processing portions or functions may be provided as one or more physical or virtual entities. The apparatus 300 may comprise one or more communication interfaces 302. The apparatus 300 may further comprise a memory or memory unit 303 for storing data, programs and/or instructions to be executed by the processor. The memory 303 may be a memory internal to the apparatus 300 or may be a memory external to the apparatus 300, for example at a cloud server. The processor 301 may comprise one or more portions, which enable the apparatus 300 to execute the method of Figure 2 for example. According to several examples of the present disclosure, an obtaining portion 310 may be configured to perform such obtaining according to S210 of Figure 2, and an adding portion 320 may be configured to perform such adding according to S220 of Figure 2.

According to several examples of the present disclosure, the respective portions of the apparatus 300 may also be understood as means for carrying out the certain function.

According to several examples of the present disclosure, there is provided a data processing system for making a power origin label trustworthy and verifiable in an industrial context. The data processing system comprises the apparatus 300 according to Figure 3. Additionally or alternatively, the data processing system comprises means for carrying out the method according to Figure 2. The data processing system may be such system 100 as illustrated with reference to Figure 1.

According to several examples of the present disclosure, there is provided an industrial plant comprising the apparatus 300 according to Figure 3 and/or the data processing system as outlined above. The industrial plant may be the industrial plant on which a certain product is produced and for which (i.e. for the production of which) power origin labels are calculated. The industrial plant may be operated by the manufacturing company 110 or the vendor as outlined above with reference to Figure 1.

According to several examples of the present disclosure, there is provided a computer-readable medium comprising instructions which, when executed by a computing system, causes the computing system to perform the method as outlined with reference to Figure 2. The computer-readable medium may be transitory or non-transitory, volatile or non-volatile.

According to several examples of the present disclosure, there is provided a computer program product comprising instructions which, when executed by a computing system, enable or cause the computing system to perform the method as outlined with reference to Figure 2. The computer program product may comprise a computer-readable medium comprising instructions of the computer program product. The computer-readable medium as mentioned above may have stored thereon the computer program product.

According to several examples of the present disclosure, there is provided a use of at least one of the apparatus 300, the data processing system as outlined above, the industrial plant as outlined above, the computer-readable medium as outlined above, and the computer program product as outlined above. In particular, there is provided use of the method as outlined with reference to Figure 2 to enable making a power origin label trustworthy and verifiable in an industrial context, and there is provided use of the power origin label to which the reference has been added.

Optional features of the method as outlined with reference to any one of Figures 1 and 2 may form part of the apparatus 200, the data processing system, the industrial plant, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to devices. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for making a power origin label trustworthy and verifiable in an industrial context, the method comprising:
- obtaining (S210) the power origin label that carries information about one or more power origins of power used for production of a product; and
- adding (S220), to the power origin label, a reference to metadata that provides evidence for the information about the one or more power origins.

2. The method according to claim 1, further comprising: adding, to the power origin label, a cryptographic signature, and/or committing the power origin label and the metadata to a ledger-based evidence collection platform.

3. The method according to claim 1 or 2, wherein the adding the reference comprises:
- constructing the reference as a cryptographic hash that is computed over the metadata; and
- adding, to the power origin label, the cryptographic hash.

4. The method according to any of claims 1 to 3, wherein the metadata comprise an aggregation of a plurality of data points, wherein a data point of the plurality of data points is associated with a share of the power used for the production of the product, wherein the share is in a range from 0% to 100%.

5. The method according to any of claims 1 to 4, wherein the metadata comprise an aggregation of a plurality of pieces of sub-metadata, wherein a piece of sub-metadata of the plurality of pieces of sub-metadata is associated with a share of the power used for the production of the product, wherein the share is in a range from 0% to 100%.

6. The method according to claim 4 or 5,
wherein data points of the plurality of data points have different trustworthiness,
wherein pieces of sub-metadata of the plurality of pieces of sub-metadata have different trustworthiness.

7. The method according to any of claims 4 to 6,
wherein aggregated data points in the aggregation of the plurality of data points have heterogenous trust levels,
wherein aggregated pieces of sub-metadata in the aggregation of the plurality of pieces of sub-metadata have heterogenous trust levels.

8. The method according to any of claims 1 to 7, wherein the metadata comprise at least one of:
- measurements from power management systems in a factory associated with the production of the product,
- inverters of a photovoltaic installation associated with the power used for the production,
- power consumption of one or more machines associated with the production of the product, and
- a weather report indicative of one or more environmental conditions associated with the production of the product.

9. The method according to any of claims 1 to 8, wherein the metadata comprise at least one of:
- verifiable data,
- non-verifiable data. and
- power origin labels associated with an origin of the metadata.

10. The method according to any of claims 1 to 9, further comprising: empowering an auditor to verify an accuracy and an authenticity of data that went into a generating of the power origin label and/or to verify a labeling process that was performed for the generating of the power origin label, wherein the empowering is based on enabling the auditor to access one or more pieces of the metadata that is associated with the power origin label based on the added reference.

11. The method according to any of claims 1 to 10, wherein the adding the reference to the metadata further comprises adding the reference to one or more pieces of the metadata, wherein the one or more pieces of the metadata are a share of the metadata that is associated with the power origin label.

12. A data processing apparatus (300) comprising one or more processors being configured to carry out the method according to any of claims 1 to 11.

13. A computer program product comprising instructions which, when executed by a computing system, enable and/or cause the computing system to perform the method according to any of claims 1 to 11.

14. A computer-readable medium having stored thereon the computer program product according to claim 13.

15. A use of one or more power origin labels for labelling a power origin of power used in an industrial context, wherein the one or more power origin labels are obtained according to the method according to any of claims 1 to 11.
